# EUROPÄISCHE PATENTSCHRIFT

(11) **EP 4 555 603 B1**
(45) Veröffentlichungstag und Bekanntmachung des Hinweises auf die Patenterteilung: **04.03.2026**
(21) Anmeldenummer: 23735999.7
(22) Anmeldetag: 23.06.2023
(51) Int. Cl.: H02K 1/18, H02K 3/52, H02K 21/24

(54) **STATOR FÜR EINE ELEKTRISCHE AXIALFLUSSMASCHINE, VERFAHREN ZUM HERSTELLEN EINES SOLCHEN STATORS UND ELEKTRISCHE AXIALFLUSSMASCHINE MIT EINEM SOLCHEN STATOR**
STATOR FOR AN ELECTRIC AXIAL FLUX MACHINE, METHOD FOR PRODUCING SUCH A STATOR AND ELECTRIC AXIAL FLUX MACHINE WITH SUCH A STATOR
STATOR POUR MACHINE ÉLECTRIQUE À FLUX AXIAL, PROCÉDÉ DE FABRICATION D'UN TEL STATOR ET MACHINE ÉLECTRIQUE À FLUX AXIAL AVEC UN TEL STATOR

(30) Priorität: 12.07.2022 DE 102022117272
(43) Veröffentlichungstag der Anmeldung: 21.05.2025
(73) Patentinhaber: Bayerische Motoren Werke Aktiengesellschaft, 80809 München (DE)
(72) Erfinder: SCHMIDT, Robert, 81539 München (DE); LANG, Markus, 81549 München (DE); KOENIG-PETERMAIER, Korbinian, 80797 München (DE)
(86) Internationale Anmeldenummer: PCT/EP2023/067130
(87) Internationale Veröffentlichungsnummer: WO 2024/012848

(56) Entgegenhaltungen:
- CN-A- 112 713 670
- CN-A- 114 301 206
- CN-U- 203 827 147
- DE-A1- 102019 125 871
- JP-A- 2011 182 576

## Beschreibung

Die vorliegende Erfindung betrifft einen Stator für eine elektrische Maschine, die als eine Axialflussmaschine ausgebildet ist. Des Weiteren betrifft die Erfindung ein Verfahren zum Herstellen eines solchen Stators. Zudem betrifft die Erfindung eine elektrische Axialflussmaschine, die einen solchen Stator aufweist.

Bei der Entwicklung von elektrischen Maschinen, insbesondere Axialflussmaschinen, wird heutzutage nach einer immer höheren spezifischen Leistungsdichte verlangt. Statoren von Axialflussmaschinen werden heutzutage oftmals mit Zahnspulen aufgebaut, wobei ein Eisenkern als SMC (Soft Magnetic Composites) dargestellt ist. Die Verankerung bzw. Befestigung der Zahlenspulen in einem Gehäuse der Axialflussmaschine erfolgt zumeist über eine Einfassung in ein dünnwandiges Kunststoffbauteil. Dieses Kunststoffbauteil ist mit einer Deckelseite der Axialflussmaschine verbunden, sodass sich das Kunststoffbauteil im Luftspalt zwischen einem Rotor und dem Stator befindet. Die Verbindung zwischen dem Kunststoffbauteil und der Deckelseite ist oftmals nur geklebt. Hierdurch sind die übertragbaren Drehmomente durch die Stärke/Stabilität bzw. Festigkeit der Klebeverbindung zwischen dem Kunststoffbauteil und der Deckelseite limitiert. Zudem führt das im Luftspalt zwischen Rotor und Stator angeordnete Kunststoffbauteil zu einer weiteren Verringerung bzw. Begrenzung der Drehmomentübertragung. Darüber hinaus ist es erforderlich, für ein geblechtes Zahnspulenblechpaket die einzelnen Bleche zu verpressen. Ein herkömmlicher Stator für eine elektrische Axialflussmaschine sowie eine herkömmliche elektrische Axialflussmaschine sind beispielsweise aus der DE 10 2021 124 998 A1 bekannt. Ferner offenbart die EP 2 962 383 B1 eine elektrische Axialflussmaschine, wobei Statorzähne eines Stators diese herkömmlichen Axialflussmaschinen von einer Ringstruktur miteinander und mit einem den Stator radial außen umgebenden Gehäuse verbunden sind.

Die CN 112 713 670 A offenbart einen Scheibenläufermotor mit einer Rotorbaugruppe und einer Statorbaugruppe. Die Statorbaugruppe umfasst eine Motorendkappe, einen festen Dorn, mehrere geteilte Klappenkerne und ein Wicklungsskelett, wobei mehrere der geteilten Klappenkerne in dem Wicklungsskelett vorgesehen und zwischen der Motorendkappe und dem festen Dorn angeordnet sind.

Aus der JP 2011 182576 A ist ein Axialspaltmotor bekannt, bei dem ein Rotor und ein Stator mit einem Spalt in der axialen Richtung des Motors einander gegenüberliegend angeordnet sind. Der Stator umfasst einen leitenden Rahmen einer Halterahmenstruktur mit radialen Säulen in vorbestimmten Abständen in der Umfangsrichtung und eine Vielzahl von Spaltkernen, die in dem Rahmen in Abständen der Säulen gehalten werden und in der Umfangsrichtung angeordnet sind.

Überdies offenbart die CN 114 301 206 A einen Scheibenantriebsmotor mit einer fest auf einer Hauptwelle angeordneten Scheibenstatoranordnung. die Scheibenstatoranordnung umfasst obere und untere speichenartige Statorhalterungen, wobei die oberen und unteren speichenartigen Statorhalterungen fest mit der Hauptwelle in axial beabstandeten Intervallen verbunden sind. Eine Vielzahl von oberen und unteren Statorspulenschlitzen sind in Umfangsintervallen in den oberen und unteren speichenartigen Statorhalterungen ausgebildet. Weiterhin umfasst die Scheibenstatoranordnung eine Vielzahl von Statorspulenmodulen, wobei die Vielzahl von Statorspulenmodulen in Umfangsintervallen auf einer äußeren Umfangsseite der Hauptwelle angeordnet ist und zwischen den oberen und unteren Speichenstatorhaltern angeordnet ist. Die oberen und unteren Enden jedes der Statorspulenmodule sind in entsprechende obere und untere Statorspulenschlitze eingesetzt.

Aufgabe der Erfindung ist es, ein Drehmomentübertragungsvermögen einer Axialflussmaschine zu erhöhen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche im Rahmen der Erfindung, wie sie durch die Ansprüche definiert ist, gegebenenfalls in Verbindung mit einem oder mehr der Unteransprüche, anzusehen.

Gemäß der Erfindung wird ein Stator für eine elektrische Axialflussmaschine vorgeschlagen. Der Stator weist eine Trägerstruktur, Spuleneinheiten, einen Spannring sowie eine Statoraußenschale auf.

Die Trägerstruktur weist zwei koaxial zueinander angeordnete und axial voneinander beabstandete Trägerscheiben und eine Rotorwellenlagerung auf. Dabei weisen die Trägerscheiben jeweils diskrete Sternfortsätze auf, die sich strahlenförmig von einem Kreisringanteil der Trägerscheibe radial nach außen wegerstrecken. Daher können die Trägerscheiben auch Trägersternscheiben oder Sternscheiben genannt werden. Die Sternfortsätze entspringen also dem Kreisringanteil und liegen dabei in derselben Ebene wie der Kreisringanteil selbst. Die Sternfortsätze sind hinsichtlich Größe und Geometrie jeweils gleich ausgebildet und in Umfangsrichtung äquidistant voneinander beabstandet. Radial außenliegende Enden der Sternfortsätze liegen auf einem gemeinsamen Umkreis, wobei dessen Mittelpunkt und ein Mittelpunkt des Kreisringanteils zusammenfallen. Die Mittelpunkte liegen auf einer Längsmittenachse der Trägerstruktur, und die Längsmittenachse der Trägerstruktur fällt mit einer Längsmittenachse der Rotorwellenlagerung zusammen.

Die Spuleneinheiten sind jeweils zwischen zwei in Umfangsrichtung aufeinanderfolgenden Sternfortsatzpaaren der Trägerscheiben angeordnet. Dabei grenzen die Spuleneinheiten direkt an die Sternfortsatzpaare an, wodurch die Spuleneinheiten in Bezug zu der Trägerstruktur in Umfangsrichtung fixiert sind. Dabei ist hierin ein Sternfortsatzpaar aus einem Sternfortsatz einer der Trägerscheiben und einem winkelgleich angeordneten Sternfortsatz der anderen der Trägerscheiben gebildet. Die Trägerscheiben sind relativ zueinander drehfest angeordnet.

Die jeweilige Spuleneinheit weist ein Blechpaket auf, das insbesondere aus einem Blechstapel gebildet ist, dessen Einzelbleche in radialer Richtung gestapelt bzw. geblecht sind. Jeweilige Endabschnitte des jeweiligen Blechpakets der Spuleneinheiten überragen die Trägerstruktur in axialer Richtung. Mit anderen Worten ragt das jeweilige Blechpaket der jeweiligen Spuleneinheit entlang der Längsmittenachse der Trägerstruktur beidseitig über die Trägerscheiben hinaus. Die Sternfortsätze der Trägerscheiben weisen radial außenliegende Fixierungsenden auf, die die Spuleneinheiten radial nach außen hin überragen. Mit anderen Worten ist ein erster Radius (gemessen von der Längsmittenachse der Trägerstruktur bis zu den Fixierungsenden) größer als ein zweiter Radius (gemessen von der Längsmittenachse der Trägerstruktur bis zu einer radial außenliegenden Kante des jeweiligen Blechpakets).

Mittels des Spannrings sind die Spuleneinheiten radial in Richtung hin zur Rotorwellenlagerung gespannt, indem der Spannring in Umfangsrichtung um die Endabschnitte der Spuleneinheiten gespannt ist. Der Spannring ist insbesondere einstückig ausgebildet. Es kann beispielsweise vorgesehen sein, dass der Spannring mittels einer Spannkraft und/oder thermisch radial geweitet wird und dann um die Endabschnitte der Spuleneinheiten gelegt wird. Sobald die Spannkraft und/oder die thermische Einwirkung entfällt/entfallen, verengt sich der Spannring radial, wodurch die Spuleneinheiten in Richtung hin zur Rotorwellenlagerung bzw. zur Längsmittenachse der Trägerstruktur gespannt werden. Hierzu kann ein Innenradius des Spannrings in Bezug auf den zweiten Radius ein Untermaß aufweisen. Zwischen dem Spannring, das heißt dessen Innenanlagefläche, und den Endabschnitten der Spuleneinheiten herrscht ein Kraftschluss, insbesondere mittels einer Presspassung.

Die Statoraußenschale ist zwischen den Trägerscheiben angeordnet und umschließt die Spuleneinheiten in Umfangsrichtung radial bedeckend. Zudem ist die Statoraußenschale an den Fixierungsenden der Sternfortsätze in Bezug zur Trägerstruktur drehfest befestigt. Insbesondere ist die Statoraußenschale dazu eingerichtet, als äußere Struktur für eine Drehmomentabstützung zu fungieren. Beispielsweise kann die Statoraußenschale hierzu einen Abstützblock aufweisen, der dazu eingerichtet ist, mit einem Gegenlager eines Gehäuses der Axialflussmaschine als Drehmomentabstützung zu fungieren.

Die Trägerscheiben und/oder der Spannring und/oder die Statoraußenschale kann/können aus einem metallischen Werkstoff gebildet sein. Ferner ist ein faserverstärkter Werkstoff denkbar.

Indem die radial geblechten Blechpakete zwischen die Trägerstruktur und den Spannring eingespannt sind, werden die Einzelbleche der Spuleneinheiten bzw. Blechpakete im Betrieb der Axialflussmaschine nicht durch die im Betrieb wirkenden magnetischen Kräfte aus dem Stator herausgezogen. Dabei kann auf ein formschlüssiges Verbinden der Einzelbleche verzichtet werden, wodurch die Herstellung des Stators vereinfacht ist. Generell ist der hierin beschriebene Stator besonders einfach, insbesondere automatisiert, herstellbar, da die einzelnen Elemente der Axialflussmaschine besonders dazu geeignet sind, mittels einer Maschine, insbesondere eines Roboters, gehandhabt zu werden. Dabei sind im Vergleich zu herkömmlichen Statoren besonders hohe Drehmomente übertragbar, da im Vergleich zum Stand der Technik darauf verzichtet wird, die Einzelbleche der Blechpakete mittels eines Kunststoffteils abzustützen.

Die jeweilige Spuleneinheit weist einen Schienentragkörper auf, der aus einem elektrisch isolierenden Material ausgebildet ist. Der Schienentragkörper weist als Enden zwei Stützblöcke auf, sodass der Kontaktierungsträger entlang seiner axialen Längserstreckung, das heißt beidseitig, an den Stützblöcken bzw. mittels der Stützblöcke endet. Bei dem Stator ist der Schienentragkörper mittels der Stützblöcke radial auf den Spannring aufgestützt. Insbesondere ist der Schienentragkörper direkt oder indirekt an dem Blechpaket befestigt. Indem der Schienentragkörper über dessen Stützblöcke auf den Spannring aufgestützt ist, ist die jeweilige Spuleneinheit über den Schienentragkörper und über das Blechpaket besonders sicher zwischen den Sternfortsatzpaaren der Trägerscheiben fixiert.

Gemäß einer möglichen Weiterbildung des Stators ist vorgesehen, dass die Trägerstruktur einen Rotorlagerzylinder aufweist. Dabei ist die jeweilige Trägerscheibe an einer jeweiligen Stirnfläche des Rotorlagerzylinders mit diesem kraft-, form- und/oder stoffschlüssig verbunden, insbesondere verschraubt. Hieraus resultiert, dass die Trägerscheiben über eine Länge des Rotorlagerzylinders axial voneinander beabstandet sind. Der Rotorlagerzylinder ist insbesondere als ein Kreisringzylinder ausgebildet, wobei eine Innenumfangsfläche des Rotorlagerzylinders bzw. Kreisringzylinders dazu eingerichtet ist, als Lagerstelle für eine Rotorwelle der Axialflussmaschine zu fungieren. Das bedeutet, dass die Rotorwellenlagerung durch den Rotorlagerzylinder gebildet sein kann. Hierdurch ist eine besonders effiziente Lagerung der Rotorwelle im Zentrum der Axialflussmaschine bzw. koaxial zur Längsmittenachse der Trägerstruktur ermöglicht. Generell kann vorgesehen sein, dass die Trägerstruktur einstückig ausgebildet ist, indem beispielsweise die Trägerscheiben und der Rotorlagerzylinder einstückig miteinander ausgebildet werden. Alternativ kann es sich bei der Trägerstruktur um ein mehrteiliges Konstrukt handeln, wobei die Trägerscheiben und die Rotorwellenlagerungen, insbesondere der Rotorlagerzylinder, jeweils separat voneinander bereitgestellt und miteinander kraft-, form- und/oder stoffschlüssig zu der Trägerstruktur verbunden werden. Jedenfalls hat der Rotorlagerzylinder eine Doppelfunktionalität inne, nämlich - erstens - fungiert der Rotorlagerzylinder als die Rotorwellenlagerung und - zweitens - fungiert der Rotorlagerzylinder als Verbindungselement, mittels dessen die beiden Trägerscheiben drehfest miteinander verbunden sind.

In einer weiteren möglichen Ausgestaltung des Stators weist dieser einen oder mehr Zentrierzylinder auf. Der jeweilige Zentrierzylinder ist koaxial an dem Kreisringanteil der Trägerscheibe angeordnet und erstreckt sich axial von den Spuleneinheiten weg. Dabei sind die Spuleneinheiten über deren Endabschnitte an einer Außenumfangsfläche des Zentrierzylinders abgestützt und in Radialrichtung zwischen dem Zentrierzylinder und dem Spannring eingespannt. Es ist insbesondere vorgesehen, dass der Stator je Trägerscheibe einen solchen Zentrierzylinder aufweist, was bedeutet, dass der Stator beispielsweise zwei Zentrierzylinder aufweist. So können die Spuleneinheiten besonders effizient und sicher positionsfest zwischen den Sternfortsatzpaaren der Trägerscheiben gehalten werden. Durch den/die Zentrierzylinder kann der Stator unter Einhaltung von vorteilhaft besonders geringen Toleranzen gefertigt werden, wobei solche besonders geringen Toleranzen günstig für ein besonders hohes Drehmomentübertragungsvermögen der Axialflussmaschine sind. Denn auf diese Weise sind die Spuleneinheiten besonders exakt kreisförmig angeordnet.

In Zusammenhang mit dem Zentrierzylinder ist in einer weiteren möglichen Ausgestaltung des Stators vorgesehen, dass an dem (jeweiligen) Kreisringanteil der Trägerscheibe zwei oder mehr Ausrichtungspins ausgebildet sind, die sich jeweils axial vom Kreisringanteil nach außen weg erstrecken. Dabei sind die Ausrichtungspins dazu eingerichtet, das koaxiale Ausrichten des Zentrierzylinders in Bezug zu der Trägerscheibe zu unterstützen. Beim Zusammensetzen bzw. Zusammenbauen der Elemente der Axialflussmaschine, insbesondere deren Stator, gestaltet sich so das koaxiale Ausrichten des Zentrierzylinders in Bezug zu der Trägerscheibe besonders einfach und/oder aufwandsarm, wobei der Zentrierzylinder und die Trägerscheibe dennoch besonders exakt koaxial aneinander ausgerichtet sind. Denn es ist vorgesehen, dass eine Längsmittenachse des Zentrierzylinders und die Längsmittenachse der Trägerstruktur zusammenfallen.

Dem Gedanken an eine besonders positionssichere Fixierung der jeweiligen Spuleneinheit zwischen den Sternfortsatzpaaren der Trägerscheiben ist in besonderem Maße Rechnung getragen, wenn - wie in einer weiteren möglichen Ausgestaltung des Stators vorgesehen - der Schienentragkörper zwischen dem Spannring und der Statoraußenschale radial fixiert ist, indem die Stützblöcke mittels der Statoraußenschale in Richtung hin zum Spannring gespannt sind. Hierdurch ist ein unbeabsichtigtes bzw. unerwünschtes radiales Ausrücken der Spuleneinheiten besonders sicher verhindert, da dieses radiale Ausrücken zum einen mittels des Spannrings und zum anderen mittels der Statoraußenschale in Verbindung mit dem jeweiligen Schienentragkörper gesperrt ist.

Eine weitere mögliche Ausgestaltung des Stators sieht vor, dass die jeweilige Spuleneinheit eine elektrische Spule aufweist und der Stator eine Stromschienenanordnung aufweist. Die Stromschienenanordnung weist mehrere axial voneinander beabstandete Stromschienen auf, die außenumfangsseitig zwischen der Statoraußenschale und den Spuleneinheiten angeordnet sind. Die jeweilige Stromschiene ist dabei mit zwei oder mehr der elektrischen Spulen elektrisch kontaktiert. Handelt es sich bei der Axialflussmaschine zum Beispiel um eine dreiphasige elektrische Maschine, weist die Stromschienenanordnung vier Stromschienen auf, wobei drei der Stromschienen die drei Phasen repräsentieren und die vierte Stromschiene zum Realisieren einer Sternpunktschaltung eingesetzt ist. Jedenfalls ist die Stromschienenanordnung dazu eingerichtet, als eine sogenannte Statorverschaltung zu fungieren. Hierzu weist die Stromschienenanordnung insbesondere eine Phasenschnittstelle auf, die dazu eingerichtet ist, mit einer elektrischen Energieversorgung elektrisch kontaktiert zu werden, sodass über die Phasenschnittstelle dem Stator im Betrieb der Axialflussmaschine elektrische Antriebsenergie bereitgestellt werden kann, mittels derer der Rotor der Axialflussmaschine angetrieben werden kann.

Die Schienentragkörper fungieren insbesondere als Träger bzw. Tragelemente für die Stromschienen der Stromschienenanordnung. Hierzu können die Schienentragkörper zwischen den Stützblöcken, das heißt zwischen den Enden des jeweiligen Schienentragkörpers, dünner ausgebildet sein, sodass zwischen den Stützblöcken ein Aufnahmeraum für die Stromschienen gebildet ist. Da der Schienentragkörper aus dem elektrisch isolierenden Material, beispielsweise Kunststoff, ausgebildet ist, sind die Stromschienen voneinander elektrisch isoliert, obwohl eventuell zwei oder mehr der Stromschienen in dem Aufnahmeraum des jeweiligen Schienentragkörpers angeordnet sind und den Schienentragkörper direkt berühren. Zudem fungiert der Schienentragkörper als elektrisches Isolierungselement zwischen den Stromschienen und der jeweiligen Spule.

Der Schienentragkörper des Stators kann, wie in einer weiteren möglichen Ausgestaltung vorgeschlagen, zwei voneinander elektrisch isolierte Spulenkontaktierungselemente aufweisen, die jeweils mit einem jeweiligen Stromschienenkontaktierungselement des Schienentragkörpers elektrisch leitend verbunden sind. Dabei sind Spulenenden der Spule der entsprechenden Spuleneinheit jeweils mit einem der Spulenkontaktierungselemente elektrisch leitend kontaktiert. Ferner ist eine der Stromschienen mit einem der Stromschienenkontaktierungselemente und eine andere der Stromschienen mit einem anderen der Stromschienenkontaktierungselemente elektrisch leitend verbunden. Insbesondere sind jeweilige Leiterbahnen, die das jeweilige Spulenkontaktierungselement und das zugehörige Stromschienenkontaktierungselement elektrisch leitend verbindet, in das elektrisch isolierende Material des Schienentragkörpers eingebettet. Mit anderen Worten kann vorgesehen sein, dass die Leiterbahnen, mittels derer das jeweilige Spulenkontaktierungselement und das entsprechend zugehörige der Stromschienenkontaktierungselemente elektrisch leitend verbunden sind, mit dem elektrisch isolierenden Material des Schienentragkörpers ummantelt sind. Das Spulenkontaktierungselement ist insbesondere als eine Buchse ausgebildet, wobei das entsprechende der Spulenenden als ein mit der Buchse korrespondierendes Steckelement ausgeführt sein kann. Das Stromschienenkontaktierungselement ist beispielsweise als ein Kontaktierungspin ausgebildet, der sich ausgehend von der entsprechenden Leiterbahn aus dem Schienentragkörper bzw. aus dessen elektrisch isolierendem Material, herauserstreckt. Dieser Kontaktierungspin erstreckt sich insbesondere in den Aufnahmeraum für die Stromschienen hinein. Das Spulenkontaktierungselement, in das das entsprechende Spulenende hineingesteckt werden kann, wodurch dann das Spulenkontaktierungselement und das entsprechende Spulenende elektrisch miteinander kontaktiert sind, kann insbesondere an dem jeweiligen Stützblock des Schienentragkörpers ausgebildet sein. Um eine besonders sichere elektrische Verbindung zwischen den Stromschienen und den Stromschienenkontaktierungselementen zu gewährleisten, ist insbesondere vorgesehen, dass die Stromschienen und die Stromschienenkontaktierungselemente, insbesondere die Kontaktierungspins, mittels eines thermischen Verbindungsverfahrens, beispielsweise Schweißens, aneinander befestigt sind.

Der Schienentragkörper fungiert so also nicht nur als weiteres Verbindungs- bzw. Stabilisierungselement für die jeweilige Spuleneinheit, sondern zusätzlich als elektrisches Verbindungselement zwischen den Stromschienen und den Spulen der Spuleneinheiten. Hierdurch kann der Stator der Axialflussmaschine besonders einfach und/oder aufwandsarm hergestellt werden, da er eine besonders geringe Anzahl an Einzelbauteilen aufweist.

Einer weiteren möglichen Ausführungsform des Stators zufolge weist die Statoraußenschale zwei Halbschalen auf, die in Umfangsrichtung mittels zweier Verbindungsblöcke aneinander anstoßen und miteinander verbunden sind. Es ist insbesondere vorgesehen, dass es sich bei den beiden Halbschalen für die Statoraußenschale um Gleichteile handelt. Der jeweilige Verbindungsblock weist eines der Verbindungselemente der ersten Halbschale und eines der Verbindungselemente der zweiten Halbschale auf. Dabei erstrecken sich die Verbindungselemente ausgehend von einer Außenumfangsfläche der jeweiligen Halbschale radial nach außen weg, was bedeutet, dass das jeweilige Verbindungselement ausgehend von der Außenumfangsfläche der jeweiligen Halbschale radial von dieser hervorspringt. Dies führt dazu, dass der jeweilige Verbindungsblock zur Drehmomentabstützung eingesetzt werden kann. Beispielsweise fungiert der jeweilige Verbindungsblock als jeweiliger Abstützblock des Stators.

Indem die Statoraußenschale die beiden Halbschalen aufweist, die über die Verbindungsblöcke miteinander verbunden sind, gestaltet sich das Herstellen des Stators besonders einfach und/oder aufwandsarm, da das Anordnen der Statoraußenschale in Umfangsrichtung um die Spuleneinheiten, insbesondere um die Schienentragkörper, besonders einfach ausgeführt werden kann. Zudem kann die Statoraußenschale besonders effizient radial gegen die Spuleneinheiten, insbesondere Schienentragkörper, gespannt werden, sodass die Schienentragkörper und infolgedessen die Spuleneinheiten besonders sicher gegen ein radiales Ausrücken gesperrt sind.

Die Erfindung betrifft des Weiteren eine elektrische Maschine, insbesondere Axialfluss- oder Diagonalflussmaschine, die als Stator den hierin beschriebenen Stator aufweist.

Ferner betrifft die Erfindung ein Verfahren zum Herstellen des Stators für die Axialflussmaschine. Bei dem Verfahren wird die Trägerstruktur mit den beiden Trägerscheiben bereitgestellt. Die Spuleneinheiten werden zwischen zwei in Umfangsrichtung aufeinanderfolgenden Sternfortsatzpaaren der Trägerscheiben angeordnet, wodurch die Spuleneinheiten in Bezug zu der Trägerstruktur in Umfangsrichtung fixiert werden. Zudem werden die Spuleneinheiten radial in Richtung hin zur Rotorwellenlagerung gespannt, indem der Spannring in Umfangsrichtung um die Endabschnitte der Spuleneinheiten gespannt wird. Des Weiteren wird die Statoraußenschale an den Fixierungsenden der Sternfortsätze in Bezug zu den Trägerscheiben drehfest befestigt, wodurch sie zwischen den Trägerscheiben angeordnet wird. Durch das Befestigen der Statoraußenschale an den Trägerscheiben werden die Spuleneinheiten in Umfangsrichtung von der Statoraußenschale radial bedeckend umschlossen. Dementsprechend erfolgt die Montage der Elemente des Stators von innen nach außen.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, wie er in den Ansprüchen definiert ist, zu verlassen.

Die Zeichnung zeigt in:
- Fig. 1: eine perspektivische Ansicht eines Rotorlagerzylinders für einen Stator einer Axialflussmaschine,
- Fig. 2: eine perspektivische Ansicht einer Trägerstruktur für den Stator, die den Rotorlagerzylinder und zwei Trägerscheiben aufweist,
- Fig. 3: eine perspektivische und teilweise schematisierte Ansicht einer Spuleneinheit für den Stator,
- Fig. 4: eine perspektivische Ansicht der Trägerstruktur, bei der zwischen zwei Sternfortsatzpaare der Trägerscheiben jeweils eine Spuleneinheit radial eingeschoben ist,
- Fig. 5: eine perspektivische Ansicht der Trägerstruktur, bei der mittels eines Spannrings die Spuleneinheiten radial in Richtung hin zu einer Rotorwellenlagerung gespannt sind,
- Fig. 6: eine perspektivische Ansicht der Trägerstruktur, bei der mehrere Stromschienen in Umfangsrichtung an Schienentragkörpern der Spuleneinheiten gelagert sind, und
- Fig. 7: eine perspektivische Ansicht des Stators.

In den Figuren sind gleiche und funktionsgleiche Elemente mit den gleichen Bezugszeichen versehen.

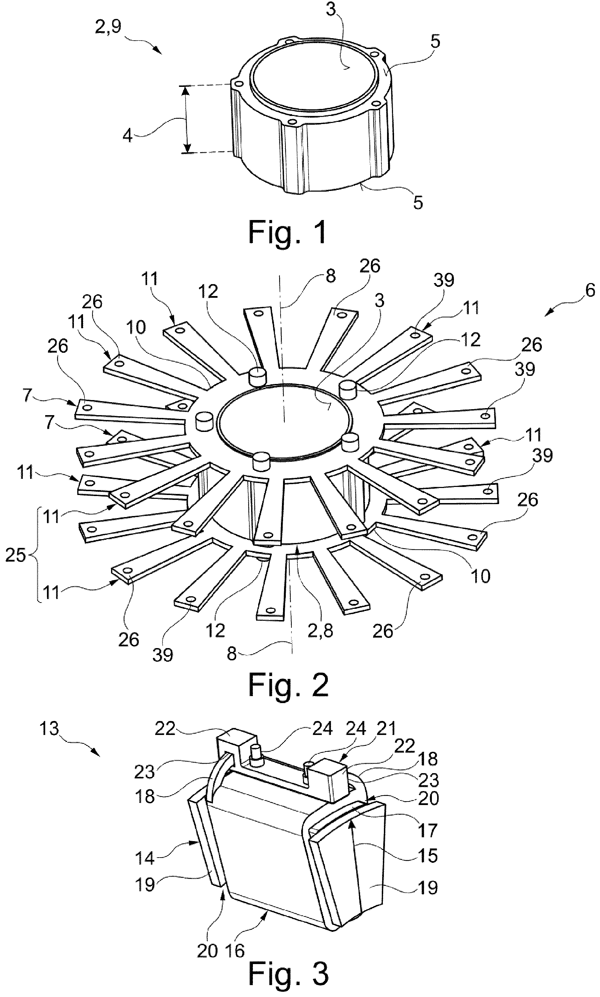

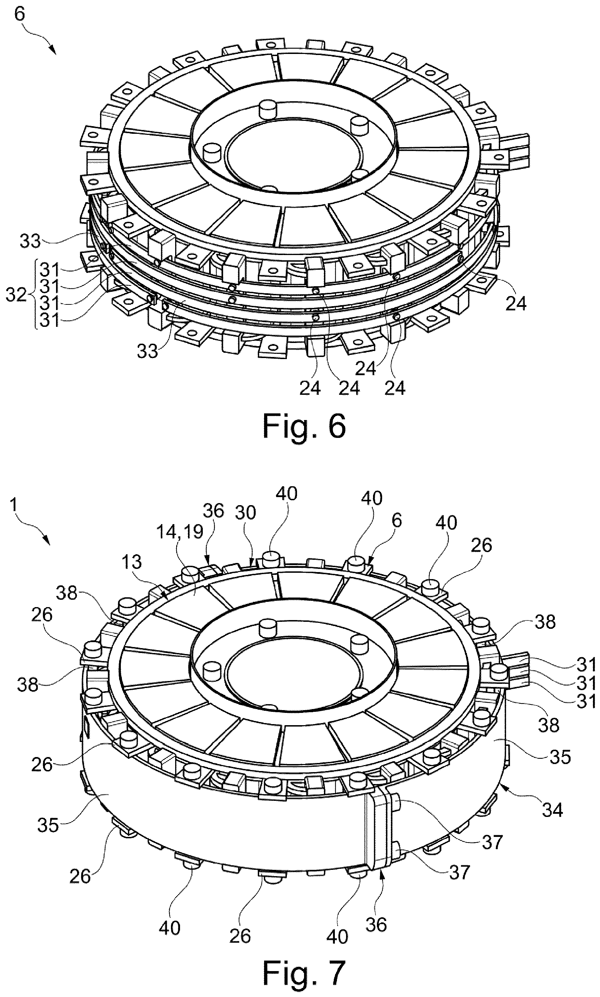

Im Folgenden werden eine als Axialflussmaschine ausgebildete elektrische Maschine (nicht dargestellt), deren Stator 1 (siehe Fig. 7) sowie ein Verfahren zum Herstellen des Stators 1 in gemeinsamer Beschreibung dargelegt. Hierzu zeigt Fig. 1 eine perspektivische Ansicht eines Rotorlagerzylinders 2, dessen Innenumfangsfläche 3 dazu eingerichtet ist, als eine Lagerstelle für einen Rotor (nicht dargestellt) der Axialflussmaschine zu fungieren. Über eine Länge 4 des Rotorlagerzylinders 2 sind zwei Stirnflächen 5 des Rotorlagerzylinders 2 voneinander gerade beabstandet.

Fig. 2 zeigt eine perspektivische Ansicht einer Trägerstruktur 6 des Stators 1, wobei die Trägerstruktur 6 den Rotorlagerzylinder 2 und zwei Trägerscheiben 7 aufweist. Die Trägerscheiben 7 sind koaxial zueinander angeordnet, das heißt, die Trägerscheiben 7 teilen sich eine gemeinsame Längsmittenachse 8. Entlang der Längsmittenachse 8 sind die Trägerscheiben 7 axial voneinander beabstandet, vorliegend über die Länge 4 des Rotorlagerzylinders 2. Dabei ist der Rotorlagerzylinder 2 koaxial zu den beiden Trägerscheiben 7 angeordnet, sodass sich die Trägerscheiben 7 und der Rotorlagerzylinder 2 die Längsmittenachse 8 teilen. Bei der Längsmittenachse 8 handelt es sich insbesondere um eine Längsmittenachse bzw. Rotorachse (nicht dargestellt) der Axialflussmaschine. Dementsprechend fallen die Längsmittenachse 8 und die Längsmittenachse des Rotors zusammen. Die Trägerstruktur 6 weist ferner eine Rotorwellenlagerung 9 auf, die im vorliegenden Beispiel durch den Rotorlagerzylinder 2 gebildet ist.

Die jeweilige Trägerscheibe 7 weist einen Kreisringanteil 10 auf, von welchem sich eine Vielzahl - vorliegend und lediglich beispielhaft fünfzehn - Sternfortsätze 11 radial nach außen weg erstrecken, wovon in den Fig. aus Übersichtlichkeitsgründen nur einige wenige mit dem entsprechenden Bezugszeichen versehen sind.

Die Trägerstruktur 6 wird hier gebildet, indem die Trägerscheiben 7 und der Rotorlagerzylinder 2 miteinander verbunden. Vorliegend ist vorgesehen, dass die jeweilige Trägerscheibe 7 und der Rotorlagerzylinder 2 miteinander verbunden werden, indem die Trägerscheiben 7 und der Rotorlagerzylinder 2 wie in Fig. 2 dargestellt miteinander verschraubt werden. In Fig. 2 sind die für die Verschraubung der jeweiligen Trägerscheibe 7 mit dem Rotorlagerzylinder 2 erforderlichen Schraubelemente 12 aus Übersichtlichkeitsgründen nicht alle mit dem entsprechenden Bezugszeichen versehen. Es ist aus Fig. 2 des Weiteren zu entnehmen, dass die jeweilige Trägerscheibe 7 an einer jeweiligen der Stirnflächen 5 des Rotorlagerzylinders 2 mit diesem verbunden ist.

Fig. 3 zeigt eine perspektivische und teilweise schematisierte Ansicht einer Spuleneinheit 13 für den Stator 1. Die jeweilige Spuleneinheit 13 weist ein radial geblechtes Blechpaket 14 auf, das aus einer Vielzahl von Einzelblechen (nicht dargestellt) gebildet ist, die in Radialrichtung (siehe Pfeil 15 in Fig. 3) gestapelt sind. Zwischen einer elektrischen Spule 16 der Spuleneinheit 13 und dem Blechpaket 14 ist ein Spulenisolierungsmantel 17 angeordnet, mittels dem die elektrische Spule 16 und das Blechpaket 14 der Spuleneinheit 13 elektrisch voneinander isoliert sind. Die elektrische Spule 16 der Spuleneinheit 13 weist eine Vielzahl von Windungen (nicht dargestellt) auf, wobei die Spule 16 bzw. die Windungen an zwei Spulenenden 18 enden. Das Blechpaket 14 weist zwei Endabschnitte 19 auf, die entlang einer Spulenachse (nicht dargestellt) der elektrischen Spule 16 seitlich aus der Spule 16 herausragen. Des Weiteren überragt der jeweilige Endabschnitt 19 des Blechpakets 14 den Spulenisolierungsmantel 17 seitlich, das heißt entlang der Umfangsrichtung des Stators 1. Hierdurch ist zwischen dem jeweiligen Endabschnitt 19 und der elektrischen Spule 16 ein Spalt 20 gebildet. Die Spule 16 ist also über den jeweiligen Spalt 20 von dem jeweiligen Endabschnitt 19 beabstandet.

Die jeweilige Spuleneinheit 13 weist im vorliegenden Beispiel zudem einen jeweiligen Schienentragkörper 21 auf. Der Schienentragkörper 21, der aus einem elektrisch isolierenden Material, insbesondere Kunststoff, gebildet ist, weist zwei Stützblöcke 22 auf, über welche der Schienentragkörper 21 entlang seiner axialen Längserstreckung endet. Mit anderen Worten ist durch den jeweiligen Stützblock 22 ein jeweiliges Längsende des Schienentragkörpers 21 gebildet.

Im vorliegenden Beispiel ist des Weiteren vorgesehen, dass der jeweilige Schienentragkörper 21 zwei elektrisch voneinander isolierte Spulenkontaktierungselemente 23 sowie zwei elektrisch voneinander isolierte Stromschienenkontaktierungselemente 24 aufweist. Dabei sind die Spulenkontaktierungselemente 23 jeweils mit einem jeweiligen der Stromschienenkontaktierungselemente 24 elektrisch leitend verbunden, wozu der Schienentragkörper 21 im vorliegenden Beispiel Leiterbahnen aufweist (nicht dargestellt). Die Leiterbahnen sind in das elektrisch isolierende Material des Schienentragkörpers 21 eingebettet und verbinden das jeweilige Spulenkontaktierungselement 23 und das entsprechend zugehörige der Stromschienenkontaktierungselemente 24. Es ist aus Fig. 3 erkennbar, dass das jeweilige Spulenende 18 und ein jeweiliges der Spulenkontaktierungselemente 23 elektrisch leitend miteinander kontaktiert sind, vorliegend, indem das entsprechende Spulenende 18 in das als Spulenendeaufnahme bzw. -buchse ausgeführte Spulenkontaktierungselement 23 eingesteckt ist. Die elektrisch leitend mit den Spulenkontaktierungselementen 23 verbundenen Stromschienenkontaktierungselemente 24 sind vorliegend als ein jeweiliger Kontaktierungspin ausgebildet.

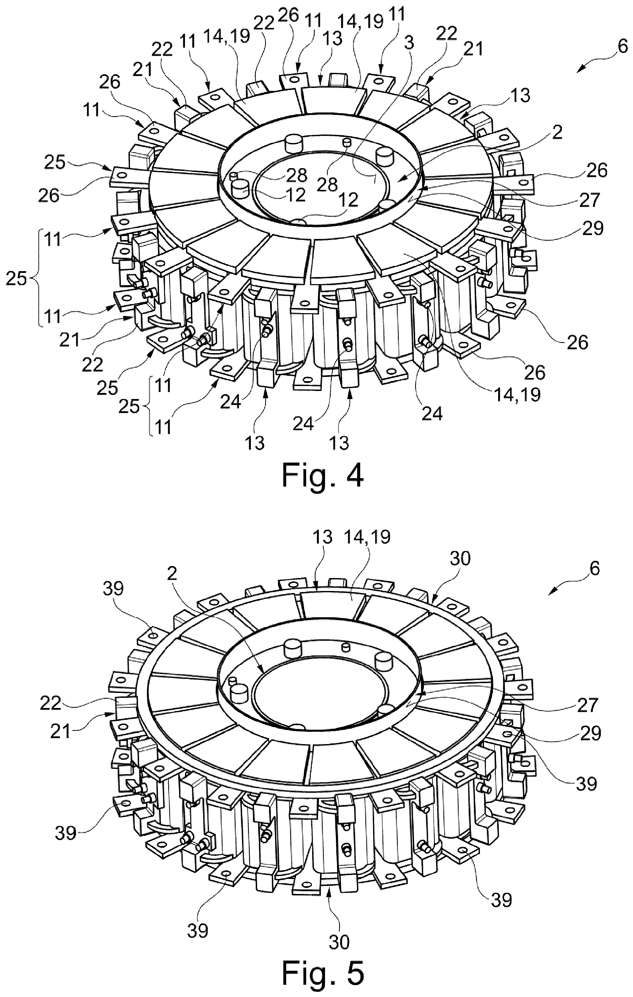

Fig. 4 zeigt eine perspektivische Ansicht der Trägerstruktur 6, bei der zwischen zwei Sternfortsatzpaaren 25 (auch in Fig. 2 dargestellt) der Trägerscheiben 7 jeweils eine Spuleneinheit 13 radial eingeschoben ist. Durch das radiale Einschieben der Spuleneinheiten 13 in die Trägerstruktur 6 werden die Spuleneinheiten 13 in Bezug zu der Trägerstruktur 6 in Umfangsrichtung fixiert, indem die jeweilige Spuleneinheit 13 zwischen die in Umfangsrichtung aufeinanderfolgenden Sternfortsatzpaare 25 der Trägerscheiben angeordnet werden. Dabei greifen die jeweiligen Sternfortsätze 11 in entsprechende der Spalte 20 der Spuleneinheiten 13 ein, sodass die Endabschnitte 19 des jeweiligen Blechpakets 14 die Trägerstruktur 6 beidseitig entlang der Längsmittenachse 8 überragen. Es ist in Fig. 4 des Weiteren zu erkennen, dass die Sternfortsätze 11 in radialer Richtung so lang ausgebildet sind, dass radial außenliegende Fixierungsenden 26 der Sternfortsätze 11 die Spuleneinheiten 13 radial nach außen hin überragen.

In Fig. 4 ist ferner dargestellt, dass im vorliegenden Beispiel der Stator 1 einen Zentrierzylinder 27 aufweist, der koaxial an dem Kreisringanteil 10 der Trägerscheibe 7 angeordnet ist. Es kann vorgesehen sein, dass der Stator 1 zwei Zentrierzylinder 27 aufweist, nämlich jeweils einen Zentrierzylinder 27 je Trägerscheibe 7. Damit die Trägerstruktur 6, insbesondere die Trägerscheiben 7 und der Zentrierzylinder 27 besonders einfach und/oder aufwandsarm sowie besonders exakt koaxial zueinander ausgerichtet werden können, sind an dem Kreisringanteil 10 der jeweiligen Trägerscheibe 7 zwei oder mehr, vorliegend drei, Ausrichtungspins 28 ausgebildet, die sich jeweils axial, das heißt entlang der Längsmittenachse 8, vom Kreisringanteil 10 nach außen weg erstrecken. Der Zentrierzylinder 27, der als Hohlzylinder ausgebildet ist, erstreckt sich ebenfalls axial, das heißt parallel zur Längsmittenachse 8, von den Spuleneinheiten 13 weg, und die Spuleneinheiten 13 sind über deren Endabschnitte 19 an einer Außenumfangsfläche 29 des Zentrierzylinders 27 abgestützt.

Fig. 5 zeigt eine perspektivische Ansicht der Trägerstruktur 6, wie sie in Fig. 4 dargestellt ist, mit dem Unterschied, dass bei der in Fig. 5 dargestellten Trägerstruktur 6 mittels eines Spannrings 30 die Spuleneinheiten 13 radial in Richtung hin zu der Rotorwellenlagerung 9, das heißt hin zum Rotorlagerzylinder 2, vorliegend hin zum Zentrierzylinder 27, gespannt sind. Im Beispiel ist vorgesehen, dass der Stator 1 bzw. die Trägerstruktur 6 zwei Spannringe 30 aufweist, nämlich je Seite des Stators 1 bzw. je Seite der Trägerstruktur 6 einen Spannring 30. Der Spannring wird in Umfangsrichtung um die Endabschnitte 19 der Spuleneinheiten 13 gespannt, wodurch die Spuleneinheiten 13 radial in Richtung hin zum Zentrierzylinder 27 bzw. radial in Richtung hin zur Rotorwellenlagerung 9 gespannt sind. Hierbei ist zwischen den Endabschnitten 19 der Spuleneinheiten 13 und einer Innenumfangsfläche (nicht dargestellt) des jeweiligen Spannrings 30 ein Kraftschluss, insbesondere eine Presspassung, realisiert. Hierdurch sind die Endabschnitte 19 und infolgedessen die Spuleneinheiten 13 in Radialrichtung zwischen dem Zentrierzylinder 27 und dem Spannring 30 eingespannt. Es ist des Weiteren aus Fig. 5 zu entnehmen, dass der jeweilige Schienentragkörper 21 über dessen Stützblöcke 22 in Radialrichtung auf den Spannring 30 aufgestützt ist. Das bedeutet, dass der Spannring 30 zum Beispiel zwischen dem jeweiligen Stützblock 22 und einer radial außenliegenden Kante des jeweiligen Endabschnitts 19 eingesetzt worden ist. Alternativ hierzu ist es denkbar, dass die jeweilige Spuleneinheit 13 zunächst ohne den Schienentragkörper 21 radial in die Trägerstruktur 6 eingeschoben wurde, dann der Spannring 30 angebracht wurde und hiernach der Schienentragkörper 21 mit der Spule 16 gekoppelt wurde.

Fig. 6 zeigt eine perspektivische Ansicht der Trägerstruktur 6, wobei mehrere Stromschienen 31 einer Stromschienenanordnung 32 in Umfangsrichtung an den Schienentragkörpern 21 der Spuleneinheiten 13 gelagert sind. Das bedeutet, dass der Stator 1 die Stromschienenanordnung 32, das heißt die Stromschiene 31, aufweist, wobei die Stromschienen 31 in axialer Richtung voneinander beabstandet sind. Die jeweilige Stromschiene 31, die entlang der Umfangsrichtung des Stators 1 bzw. der Trägerstruktur 6 aus mehreren Stromschienensegmenten 33 zusammengesetzt sein kann, verläuft außenumfangsseitig um die Spuleneinheiten 13. Dabei ist die jeweilige Stromschiene 31 mit zwei oder mehr der elektrischen Spulen 16 elektrisch kontaktiert, beispielsweise indem die entsprechende Stromschiene 31 mit einem oder mehr der Stromschienenkontaktierungselemente 24 elektrisch verbunden, insbesondere verschweißt ist. Um einen Kurzschluss zwischen den Stromschienen 31 zu vermeiden, ist natürlich vorgesehen, dass je Spuleneinheit 13 eine erste der Stromschienen 31 mit einem ersten der Stromschienenkontaktierungselemente 24 und eine andere bzw. zweite der Stromschienen 31 mit dem entsprechend anderen der Stromschienenkontaktierungselemente 24 derselben Spuleneinheit 13 elektrisch leitend verbunden ist.

Fig. 7 zeigt eine perspektivische Ansicht des Stators 1, der eine Statoraußenschale 34 aufweist, die vorliegend aus zwei Halbschalen 35 gebildet ist. Die beiden Halbschalen 35 stoßen in Umfangsrichtung mittels zweier Verbindungsblöcke 36 aneinander an und sind dabei mittels der Verbindungsblöcke 36 miteinander verbunden. Die Verbindungsblöcke 36 springen radial von einer Außenumfangsfläche der Statoraußenschale 34 hervor. Im vorliegenden Beispiel sind die beiden Halbschalen 35 an den Verbindungsblöcken 36 miteinander verschraubt. An der Schraubverbindung der Halbschalen 35 beteiligte Schraubelemente sind in Fig. 7 mit dem Bezugszeichen 37 gekennzeichnet.

Die Statoraußenschale 34 ist zwischen den Trägerscheiben 7 angeordnet und umschließt die Spuleneinheiten 13 in Umfangsrichtung radial bedeckend. Zudem ist die Statoraußenschale 34 bzw. sind die Halbschalen 35 an den Fixierungsenden 26 mit den Sternfortsätzen 11 verbunden, sodass die Statoraußenschale 34 und die Trägerstruktur 6 zueinander drehfest sind. Hierzu weist die Statoraußenschale 34 im vorliegenden Beispiel Schraubelementaufnahmen 38 auf, die mit Schraubelementaufnahmen 39 (siehe Fig. 2, 5 und 6) der Fixierungsenden 26 korrespondierend angeordnet sind. Je Sternfortsatzpaar 25 weist die Statoraußenschale 34 an deren Innenumfangsfläche eine Schraubelementaufnahme 38 auf, wobei sich ein zugehöriges Schraubelement 40 jeweils entlang der Längsmittenachse 8, das heißt axial, gleichzeitig durch zwei Schraubelementaufnahmen 39 und die zugehörige Schraubelementaufnahme 38 hindurch erstreckt. Auf diese Weise ist die Statoraußenschale 34 in Bezug zu der Trägerstruktur 6 besonders sicher drehfest an der Trägerstruktur 6 befestigt.

Vorliegend ist der jeweilige Schienentragkörper 21 zwischen den Spannringen 30 und der Statoraußenschale 34 radial fixiert, indem die Stützblöcke 22 mittels der Statoraußenschale 34 in Richtung hin zu den Spannringen 30 gespannt sind. Mit anderen Worten wird der Schienentragkörper 21 zwischen den Spannringen 30 und der Statoraußenschale 34 gehalten, sobald die Statoraußenschale 34 bestimmungsgemäß in Umfangsrichtung die Spuleneinheiten 13 umschließt.

Bei dem Verfahren zum Herstellen des Stators 1 wird die Trägerstruktur 6 mit den beiden Trägerscheiben 7 bereitgestellt. Die Spuleneinheiten 13 werden dann zwischen zwei in Umfangsrichtung direkt zueinander benachbarte Sternfortsatzpaare 25 der Trägerscheiben 7 bzw. der Trägerstruktur 6 angeordnet, wodurch die Spuleneinheiten in Bezug zu der Trägerstruktur 6 in Umfangsrichtung fixiert werden. Indem der jeweilige Spannring 30 in Umfangsrichtung um die Endabschnitte 19 der Spuleneinheiten 13 gespannt wird, werden die Spuleneinheiten 13 radial in Richtung hin zur Rotorwellenlagerung 9 gespannt. Zudem wird die Statoraußenschale 34 an den Fixierungsenden 26 der Sternfortsätze 11 in Bezug zu den Trägerscheiben 7 drehfest befestigt, wodurch sie zwischen den Trägerscheiben 7 angeordnet wird und die Spuleneinheiten 13 in Umfangsrichtung von der Statoraußenschale 34 radial bedeckend umschlossen werden.

### Bezugszeichenliste

- 1: Stator
- 2: Rotorlagerzylinder
- 3: Innenumfangsfläche
- 4: Länge
- 5: Stirnfläche
- 6: Trägerstruktur
- 7: Trägerscheibe
- 8: Längsmittenachse
- 9: Rotorwellenlagerung
- 10: Kreisringanteil
- 11: Sternfortsatz
- 12: Schraubelement
- 13: Spuleneinheit
- 14: Blechpaket
- 15: Pfeil
- 16: elektrische Spule
- 17: Spulenisolierungsmantel
- 18: Spulenende
- 19: Endabschnitt
- 20: Spalt
- 21: Schienentragkörper
- 22: Stützblock
- 23: Spulenkontaktierungselement
- 24: Stromschienenkontaktierungselement
- 25: Sternfortsatzpaar
- 26: Fixierungsende
- 27: Zentrierzylinder
- 28: Ausrichtungspin
- 29: Außenumfangsfläche des Zentrierzylinders
- 30: Spannring
- 31: Stromschiene
- 32: Stromschienenanordnung
- 33: Stromschienensegment
- 34: Statoraußenschale
- 35: Halbschale
- 36: Verbindungsblock
- 37: Schraubelement
- 38: Schraubelementaufnahme
- 39: Schraubelementaufnahme
- 40: Schraubelement

## Patentansprüche

1. Stator (1) für eine elektrische Axialflussmaschine, wobei der Stator (1) aufweist:
- eine Trägerstruktur (6), die zwei koaxial zueinander angeordnete und axial voneinander beabstandete Trägerscheiben (7) und eine Rotorwellenlagerung (2, 9) aufweist, wobei die Trägerscheiben (7) jeweils diskrete Sternfortsätze (11) aufweisen, die sich von einem Kreisringanteil (10) der Trägerscheiben (7) radial nach außen wegerstrecken,
- Spuleneinheiten (13), die jeweils zwischen zwei in Umfangsrichtung aufeinanderfolgenden Sternfortsatzpaaren (25) der Trägerscheiben (7) angeordnet sind und an die Sternfortsatzpaare (25) direkt angrenzen, wodurch die Spuleneinheiten (13) in Bezug zu der Trägerstruktur (6) in Umfangsrichtung fixiert sind, wobei
- jeweilige Endabschnitte (19) eines jeweiligen Blechpakets (14) der Spuleneinheiten (13) die Trägerstruktur (6) in axialer Richtung überragen,
- radial außenliegende Fixierungsenden (26) der Sternfortsätze (11) die Spuleneinheiten (3) radial nach außen hin überragen,
- die jeweilige Spuleneinheit (13) einen Schienentragkörper (21) aufweist, der aus einem elektrisch isolierenden Material ausgebildet ist und zwei Stützblöcke (22) aufweist, an denen der Schienentragkörper (21) entlang seiner axialen Längserstreckung endet, wobei der Schienentragkörper (21) über die Stützblöcke (22) radial auf einen Spannring (30) aufgestützt ist,
- den Spannring (30), der in Umfangsrichtung um die Endabschnitte (19) der Spuleneinheiten (13) gespannt ist, wodurch die Spuleneinheiten (13) radial in Richtung hin zur Rotorwellenlagerung (2, 9) gespannt sind,
- einen Statoraußenschale (34), die
- zwischen den Trägerscheiben (7) angeordnet ist und die Spuleneinheiten (13) in Umfangsrichtung radial bedeckend umschließt,
- an den Fixierungsenden (26) der Sternfortsätze (11) in Bezug zur Trägerstruktur (6) drehfest befestigt ist.

2. Stator (1) nach Anspruch 1,
**dadurch gekennzeichnet, dass**
die Trägerstruktur (6) einen Rotorlagerzylinder (2) aufweist, und die jeweilige Trägerscheibe (7) an einer jeweiligen Stirnfläche (5) des Rotorlagerzylinders (2) mit diesem verbunden ist, sodass die Trägerscheiben (7) über eine Länge (4) des Rotorlagerzylinders (2) axial voneinander beabstandet sind.

3. Stator (1) nach Anspruch 1 oder 2,
**gekennzeichnet durch**
einen Zentrierzylinder (27), der koaxial an dem Kreisringanteil (10) der Trägerscheibe (7) angeordnet ist und sich axial von den Spuleneinheiten (13) wegerstreckt, wobei die Spuleneinheiten (13) über deren Endabschnitte (19) an einer Außenumfangsfläche (29) des Zentrierzylinders (27) abgestützt und in Radialrichtung zwischen dem Zentrierzylinder (27) und dem Spannring (30) eingespannt sind.

4. Stator (1) nach Anspruch 3,
**dadurch gekennzeichnet, dass**
an dem Kreisringanteil (10) der Trägerscheibe (7) zwei oder mehr Ausrichtungspins (28) ausgebildet sind, die sich jeweils axial vom Kreisringanteil (10) nach außen wegerstrecken und dazu eingerichtet sind, das koaxiale Ausrichten des Zentrierzylinders (27) in Bezug zu der Trägerscheibe (7) zu unterstützen.

5. Stator (1) nach einem der vorhergehenden Ansprüche,
**dadurch gekennzeichnet, dass**
der Schienentragkörper (21) zwischen dem Spannring (30) und der Statoraußenschale (34) radial fixiert ist, indem die Stützblöcke (22) mittels der Statoraußenschale (34) in Richtung hin zum Spannring (30) gespannt sind.

6. Stator (1) nach einem der vorhergehenden Ansprüche,
**dadurch gekennzeichnet, dass**
die jeweilige Spuleneinheit (13) eine elektrische Spule (16) aufweist und der Stator (1) eine Stromschienenanordnung (32) aufweist, die außenumfangsseitig zwischen der Statoraußenschale (34) und den Spuleneinheiten (13) mehrere axial voneinander beabstandete Stromschienen (31) aufweist, wobei die jeweilige Stromschiene (31) mit zwei oder mehr der elektrischen Spulen (16) elektrisch kontaktiert ist.

7. Stator (1) nach Anspruch 6,
**dadurch gekennzeichnet, dass**
der Schienentragkörper (21) zwei voneinander elektrisch isolierte Spulenkontaktierungselemente (23) aufweist, die jeweils mit einem jeweiligen Stromschienenkontaktierungselement (24) des Schienentragkörpers (21)elektrisch leitend verbunden sind, wobei Spulenenden (18) der Spule (16) jeweils mit einem der Spulenkontaktierungselemente (23) elektrisch leitend kontaktiert sind und wobei eine der Stromschienen (31) mit einem der Stromschienenkontaktierungselemente (24) und eine andere der Stromschienen (31) mit einem anderen der Stromschienenkontaktierungselemente (24) elektrisch leitend verbunden ist.

8. Stator (1) nach Anspruch 7,
**dadurch gekennzeichnet, dass**
jeweilige Leiterbahnen, die das jeweilige Spulenkontaktierungselement (23) und das zugehörige Stromschienenkontaktierungselement (24) elektrisch leitend verbindet, in das elektrisch isolierende Material des Schienentragkörpers (21) eingebettet sind.

9. Stator (1) nach einem der vorhergehenden Ansprüche,
**dadurch gekennzeichnet, dass**
die Statoraußenschale (34) zwei Halbschalen (35) aufweist, die in Umfangsrichtung mittels zweier Verbindungsblöcke (36) aneinander anstoßen und miteinander verbunden sind.

10. Verfahren zum Herstellen eines nach einem oder mehr der vorhergehenden Ansprüche ausgebildeten Stators (1) für eine Axialflussmaschine, wobei
- die Trägerstruktur (6) mit den beiden Trägerscheiben (7) bereitgestellt wird,
- die Spuleneinheiten (13) zwischen zwei in Umfangsrichtung aufeinanderfolgenden Sternfortsatzpaaren (25) der Trägerscheiben (7) angeordnet werden, wodurch die Spuleneinheiten (13) in Bezug zu der Trägerstruktur (6) in Umfangsrichtung fixiert werden,
- die Spuleneinheiten (13) radial in Richtung hin zur Rotorwellenlagerung (2, 9) gespannt werden, indem der Spannring (30) in Umfangsrichtung um die Endabschnitte (19) der Spuleneinheiten (13) gespannt wird,
- die Statoraußenschale (34) an den Fixierungsenden (26) der Sternfortsätze (11) in Bezug zu den Trägerscheiben (7) drehfest befestigt wird, wodurch sie zwischen den Trägerscheiben (7) angeordnet wird und die Spuleneinheiten (13) in Umfangsrichtung von der Statoraußenschale (34) radial bedeckend umschlossen werden.

11. Axialflussmaschine mit einem nach einem oder mehr der Ansprüche 1 bis 9 ausgebildeten Stator (1).

## Claims

1. Stator (1) for an electric axial flux machine, wherein the stator (1) comprises:
- a support structure (6) which has two support disks (7) arranged coaxially with respect to one another and axially spaced apart from one another and a rotor shaft bearing (2, 9), wherein the support disks (7) each have discrete star extensions (11) which extend radially outwardly from an annular portion (10) of the support disks (7),
- coil units (13) which are each arranged between two star extension pairs (25) of the support disks (7) following one another in the circumferential direction and directly adjoin the star extension pairs (25), whereby the coil units (13) are fixed in the circumferential direction in relation to the support structure (6), wherein
- respective end sections (19) of a respective laminated core (14) of the coil units (13) project beyond the support structure (6) in the axial direction,
- radially outer fixing ends (26) of the star extensions (11) project beyond the coil units (3) radially outwardly,
- the respective coil unit (13) has a rail support body (21) which is formed from an electrically insulating material and has two support blocks (22) at which the rail support body (21) ends along its axial longitudinal extent, wherein the rail support body (21) is supported radially on a clamping ring (30) via the support blocks (22),
- the clamping ring (30) which is clamped in the circumferential direction around the end sections (19) of the coil units (13), whereby the coil units (13) are clamped radially in the direction towards the rotor shaft bearing (2, 9),
- a stator outer shell (34) which
- is arranged between the support disks (7) and encloses the coil units (13) in a radially covering manner in the circumferential direction,
- is fastened in a rotationally fixed manner to the support structure (6) at the fixing ends (26) of the star extensions (11).

2. Stator (1) according to claim 1,
**characterized in that**
the support structure (6) has a rotor bearing cylinder (2), and the respective support disk (7) is connected thereto at a respective end face (5) of the rotor bearing cylinder (2), so that the support disks (7) are axially spaced apart from one another over a length (4) of the rotor bearing cylinder (2).

3. Stator (1) according to claim 1 or 2,
**characterized by**
a centering cylinder (27) which is arranged coaxially on the annular portion (10) of the support disk (7) and extends axially away from the coil units (13), wherein the coil units (13) are supported via their end sections (19) on an outer peripheral surface (29) of the centering cylinder (27) and are clamped in the radial direction between the centering cylinder (27) and the clamping ring (30).

4. Stator (1) according to claim 3,
**characterized in that**
two or more alignment pins (28) are formed on the annular portion (10) of the support disk (7), which each extend axially outwardly from the annular portion (10) and are configured to support the coaxial alignment of the centering cylinder (27) in relation to the support disk (7).

5. Stator (1) according to one of the preceding claims,
**characterized in that**
the rail support body (21) is radially fixed between the clamping ring (30) and the stator outer shell (34) **in that** the support blocks (22) are clamped by means of the stator outer shell (34) in the direction towards the clamping ring (30).

6. Stator (1) according to one of the preceding claims,
**characterized in that**
the respective coil unit (13) has an electric coil (16) and the stator (1) has a busbar arrangement (32) which has, on the outer peripheral side between the stator outer shell (34) and the coil units (13), a plurality of busbars (31) axially spaced apart from one another, wherein the respective busbar (31) is in electrical contact with two or more of the electric coils (16).

7. Stator (1) according to claim 6,
**characterized in that**
the rail support body (21) has two coil contacting elements (23) electrically insulated from one another, which are each connected in an electrically conductive manner to a respective busbar contacting element (24) of the rail support body (21), wherein coil ends (18) of the coil (16) are each contacted in an electrically conductive manner with one of the coil contacting elements (23) and wherein one of the busbars (31) is connected in an electrically conductive manner to one of the busbar contacting elements (24) and another of the busbars (31) is connected in an electrically conductive manner to another of the busbar contacting elements (24).

8. Stator (1) according to claim 7,
**characterized in that**
respective conductor tracks which electrically conductively connect the respective coil contacting element (23) and the associated busbar contacting element (24) are embedded in the electrically insulating material of the rail support body (21).

9. Stator (1) according to one of the preceding claims,
**characterized in that**
the stator outer shell (34) has two half shells (35) which abut one another in the circumferential direction by means of two connecting blocks (36) and are connected to one another.

10. Method for producing a stator (1) for an axial flux machine configured according to one or more of the preceding claims, wherein
- the support structure (6) is provided with the two support disks (7),
- the coil units (13) are arranged between two star extension pairs (25) of the support disks (7) following one another in the circumferential direction, whereby the coil units (13) are fixed in the circumferential direction in relation to the support structure (6),
- the coil units (13) are clamped radially in the direction towards the rotor shaft bearing (2, 9) by the clamping ring (30) being clamped in the circumferential direction around the end sections (19) of the coil units (13),
- the stator outer shell (34) is fastened in a rotationally fixed manner to the support disks (7) at the fixing ends (26) of the star extensions (11), whereby it is arranged between the support disks (7) and the coil units (13) are enclosed in a radially covering manner by the stator outer shell (34) in the circumferential direction.

11. Axial flux machine with a stator (1) configured according to one or more of claims 1 to 9.

## Revendications

1. Stator (1) pour une machine électrique à flux axial, le stator (1) comprenant :
- une structure de support (6) qui présente deux disques de support (7) disposés coaxialement l'un par rapport à l'autre et axialement espacés l'un de l'autre et un palier d'arbre de rotor (2, 9), les disques de support (7) présentant chacun des extensions en étoile discrètes (11) qui s'étendent radialement vers l'extérieur à partir d'une partie annulaire (10) des disques de support (7),
- des unités de bobine (13) qui sont chacune disposées entre deux paires d'extensions en étoile (25) des disques de support (7) se succédant dans la direction circonférentielle et qui jouxtent directement les paires d'extensions en étoile (25), moyennant quoi les unités de bobine (13) sont fixées dans la direction circonférentielle par rapport à la structure de support (6), où
- des sections d'extrémité respectives (19) d'un noyau feuilleté respectif (14) des unités de bobine (13) font saillie au-delà de la structure de support (6) dans la direction axiale,
- des extrémités de fixation radialement extérieures (26) des extensions en étoile (11) font saillie au-delà des unités de bobine (3) radialement vers l'extérieur,
- l'unité de bobine respective (13) présente un corps de support de rail (21) qui est formé d'un matériau électriquement isolant et présente deux blocs de support (22) au niveau desquels le corps de support de rail (21) se termine le long de son étendue longitudinale axiale, le corps de support de rail (21) étant supporté radialement sur une bague de serrage (30) par l'intermédiaire des blocs de support (22),
- la bague de serrage (30) qui est serrée dans la direction circonférentielle autour des sections d'extrémité (19) des unités de bobine (13), moyennant quoi les unités de bobine (13) sont serrées radialement en direction du palier d'arbre de rotor (2, 9),
- une enveloppe extérieure de stator (34) qui
- est disposée entre les disques de support (7) et enferme les unités de bobine (13) de manière à les recouvrir radialement dans la direction circonférentielle,
- est fixée de manière solidaire en rotation à la structure de support (6) au niveau des extrémités de fixation (26) des extensions en étoile (11).

2. Stator (1) selon la revendication 1,
**caractérisé en ce que**
la structure de support (6) présente un cylindre de palier de rotor (2), et le disque de support respectif (7) est relié à celui-ci au niveau d'une face frontale respective (5) du cylindre de palier de rotor (2), de sorte que les disques de support (7) sont axialement espacés l'un de l'autre sur une longueur (4) du cylindre de palier de rotor (2).

3. Stator (1) selon la revendication 1 ou 2,
**caractérisé par**
un cylindre de centrage (27) qui est disposé coaxialement sur la partie annulaire (10) du disque de support (7) et s'étend axialement en s'éloignant des unités de bobine (13), les unités de bobine (13) étant supportées par l'intermédiaire de leurs sections d'extrémité (19) sur une surface périphérique extérieure (29) du cylindre de centrage (27) et étant serrées dans la direction radiale entre le cylindre de centrage (27) et la bague de serrage (30).

4. Stator (1) selon la revendication 3,
**caractérisé en ce que**
deux ou plusieurs broches d'alignement (28) sont formées sur la partie annulaire (10) du disque de support (7), qui s'étendent chacune axialement vers l'extérieur à partir de la partie annulaire (10) et sont conçues pour faciliter l'alignement coaxial du cylindre de centrage (27) par rapport au disque de support (7).

5. Stator (1) selon l'une des revendications précédentes,
**caractérisé en ce que**
le corps de support de rail (21) est fixé radialement entre la bague de serrage (30) et l'enveloppe extérieure de stator (34) **en ce que** les blocs de support (22) sont serrés au moyen de l'enveloppe extérieure de stator (34) en direction de la bague de serrage (30).

6. Stator (1) selon l'une des revendications précédentes,
**caractérisé en ce que**
l'unité de bobine respective (13) présente une bobine électrique (16) et le stator (1) présente un agencement de barres omnibus (32) qui présente, sur le côté de la périphérie extérieure entre l'enveloppe extérieure de stator (34) et les unités de bobine (13), plusieurs barres omnibus (31) axialement espacées les unes des autres, la barre omnibus respective (31) étant en contact électrique avec deux ou plusieurs des bobines électriques (16).

7. Stator (1) selon la revendication 6,
**caractérisé en ce que**
le corps de support de rail (21) présente deux éléments de contact de bobine (23) électriquement isolés l'un de l'autre, qui sont chacun reliés de manière électriquement conductrice à un élément de contact de barre omnibus respectif (24) du corps de support de rail (21), des extrémités de bobine (18) de la bobine (16) étant chacune en contact électriquement conducteur avec l'un des éléments de contact de bobine (23) et une des barres omnibus (31) étant reliée de manière électriquement conductrice à l'un des éléments de contact de barre omnibus (24) et une autre des barres omnibus (31) étant reliée de manière électriquement conductrice à un autre des éléments de contact de barre omnibus (24).

8. Stator (1) selon la revendication 7,
**caractérisé en ce que**
des pistes conductrices respectives qui relient de manière électriquement conductrice l'élément de contact de bobine respectif (23) et l'élément de contact de barre omnibus associé (24) sont intégrées dans le matériau électriquement isolant du corps de support de rail (21).

9. Stator (1) selon l'une des revendications précédentes,
**caractérisé en ce que**
l'enveloppe extérieure de stator (34) présente deux demi-coques (35) qui se rejoignent dans la direction circonférentielle au moyen de deux blocs de liaison (36) et sont reliées l'une à l'autre.

10. Procédé de fabrication d'un stator (1) pour une machine à flux axial configuré selon une ou plusieurs des revendications précédentes, dans lequel
- la structure de support (6) est fournie avec les deux disques de support (7),
- les unités de bobine (13) sont disposées entre deux paires d'extensions en étoile (25) des disques de support (7) se succédant dans la direction circonférentielle, moyennant quoi les unités de bobine (13) sont fixées dans la direction circonférentielle par rapport à la structure de support (6),
- les unités de bobine (13) sont serrées radialement en direction du palier d'arbre de rotor (2, 9) en ce que la bague de serrage (30) est serrée dans la direction circonférentielle autour des sections d'extrémité (19) des unités de bobine (13),
- l'enveloppe extérieure de stator (34) est fixée de manière solidaire en rotation aux disques de support (7) au niveau des extrémités de fixation (26) des extensions en étoile (11), moyennant quoi elle est disposée entre les disques de support (7) et les unités de bobine (13) sont enfermées de manière à être recouvertes radialement par l'enveloppe extérieure de stator (34) dans la direction circonférentielle.

11. Machine à flux axial avec un stator (1) configuré selon une ou plusieurs des revendications 1 à 9.
